# FASCICULE DE BREVET EUROPEEN

(11) **EP 1 848 884 B1**
(45) Date de publication et mention de la délivrance du brevet: **20.07.2016**
(21) Numéro de dépôt: 06708363.4
(22) Date de dépôt: 17.02.2006
(51) Int. Cl.: F02C 9/26

(54) **DISPOSITIF D'ALIMENTATION EN CARBURANT D'UN MOTEUR À TURBINE À GAZ AVEC DEBIT DE CARBURANT REGULE**
VORRICHTUNG ZUR KRAFTSTOFFZUFUHR FÜR EIN TURBINENTRIEBWERK MIT GEREGELTER KRAFTSTOFFSTRÖMUNGSRATE
DEVICE FOR SUPPLYING FUEL TO A GAS TURBINE ENGINE WITH REGULATED FUEL FLOW RATE

(30) Priorité: 17.02.2005 FR 0501641
(43) Date de publication de la demande: 31.10.2007
(73) Titulaire: SNECMA, 75015 Paris (FR)
(72) Inventeur: BROCARD, Jean-Marie, F- 41330 Champigny en Beauce (FR); DELDALLE, Régis, F-77170 Servon (FR); GALOZIO, Philippe, F-77127 Lieusaint (FR); MARTINI, Michel, F-77630 Arbonne la Forêt (FR); VARIZAT, Alain, F-77590 Bois Le Roi (FR)
(74) Mandataire: Delumeau, François Guy
(86) Numéro de dépôt international: PCT/EP2006/060074
(87) Numéro de publication internationale: WO 2006/087378

(56) Documents cités:
- EP-A- 0 377 292
- EP-A- 1 355 054
- FR-A- 2 818 691
- US-A- 4 280 323
- US-A1- 2004 117 102

## Description

### Arrière-plan de l'invention

L'invention concerne un dispositif d'alimentation en carburant d'un moteur, notamment un moteur d'avion, à turbine à gaz, avec un débit de carburant régulé.

De façon courante, un dispositif d'alimentation en carburant d'un moteur à turbine à gaz comporte habituellement une pompe volumétrique entraînée par le moteur par l'intermédiaire d'un boîtier d'entraînement d'accessoires couplé à un arbre du moteur. La pompe volumétrique reçoit du carburant venant d'un circuit carburant de l'avion. Une vanne de dosage à commande électro-hydraulique est montée sur une conduite d'alimentation reliant la sortie de la pompe volumétrique à une chambre de combustion du moteur. Un circuit de retour carburant avec une vanne de dérivation à ouverture variable commandée est branché entre la sortie et l'entrée de la pompe volumétrique. La vanne de dérivation est commandée hydrauliquement pour maintenir la perte de charge à travers la vanne de dosage à une valeur constante ou quasi-constante permettant de délivrer un débit désiré de carburant correspondant à la position de la vanne de dosage. Une vanne de protection de sur-vitesse ou de sur-poussée du moteur peut être montée sur la conduite d'alimentation en série ou en dérivation avec la vanne de dosage pour commander une diminution du débit de carburant en réponse à la détection d'une vitesse ou poussée excessive pouvant traduire une défaillance de la vanne de dosage ou de sa commande. Une vanne de coupure est généralement prévue en série avec les vannes de dosage et de sur-vitesse pour couper le moteur par interruption de l'alimentation en carburant par commande directe à partir du poste de pilotage. On pourra se référer notamment aux documents EP 1 355 054 et US 2004/0117102.

Dans le mode de réalisation du document EP 1 355 054, la vanne de sur-vitesse ou sur-poussée est une vanne à deux états de fonctionnement : un fonctionnement à pleine ouverture en régime normal et un fonctionnement à ouverture réduite prédéterminée en réponse à une détection de sur-vitesse ou sur-poussée. Une telle disposition présente l'inconvénient, après détection d'une sur-vitesse ou sur-poussée, de perdre la poussée du moteur ou d'imposer un débit volumique réduit de carburant qui ne peut pas être acceptable par le moteur dans certains régimes de fonctionnement.

Le document EP 0 377 292 décrit un dispositif d'alimentation d'une turbine à gaz. Le carburant (gaz compressible) est fourni par un compresseur qui assure la régulation de débit en régime normal. Deux vannes sont montées en série sur une conduite d'alimentation entre le compresseur de gaz et les injecteurs de la turbine. Ces vannes sont en position pleine ouverture en régime normal pour éviter des pertes de charges et sont commandées en régime transitoire (démarrage) ou en cas de délestage brutal pour réguler respectivement la pression et un débit réduit.

Le document US 4 280 323 montre un dispositif d'alimentation d'une turbine à gaz avec une vanne de sur-vitesse et une vanne de régulateur montées en série. La pression de carburant fournie par la pompe est augmentée afin de conserver une pression voulue au niveau des injecteurs de la turbine en dépit d'une viscosité plus élevée du carburant à froid (démarrage). Cette action est simplement de type programmée selon une loi de corrélation, sans boule de régulation.

### Objet et résumé de l'invention

L'invention a pour but de fournir un dispositif d'alimentation en carburant d'un moteur à turbine à gaz ayant un fonctionnement amélioré et propose à cet effet un dispositif tel que défini dans la revendication 1.

Ainsi, une première vanne assure une régulation du débit de carburant en mode de fonctionnement normal du moteur et une deuxième vanne, ou vanne de sur-vitesse, peut prendre le relais de la première vanne et permettre de continuer à assurer une régulation de débit après détection d'une sur-vitesse.

Le dispositif de mesure de débit peut être un débitmètre massique et le système de commande comprend un circuit local d'asservissement recevant une consigne de valeur de débit massique d'un système de régulation automatique du moteur.

En variante, le dispositif de mesure de débit est un débitmètre volumique.

Toujours en variante, le dispositif de mesure de débit est un dispositif permettant une mesure de débit à partir de la connaissance de la chute de pression et de la section de passage à travers ce dispositif.

Selon une particularité du dispositif de régulation, la première vanne est une vanne à commande directe commandée électriquement. Le premier circuit de commande peut alors comprendre au moins un actionneur électromécanique pour commander le degré d'ouverture de la première vanne, et une boucle d'asservissement recevant un signal fourni par le dispositif de mesure de débit et représentatif du débit réel de carburant, recevant un signal de consigne représentatif du débit souhaité de carburant et fournissant un signal de commande de l'actionneur en fonction de l'écart détecté entre les débits réel et souhaité. La boucle d'asservissement peut être implantée localement au voisinage de la première vanne et extérieure à un système de régulation électronique du moteur fournissant le signal de consigne. L'actionneur mécanique peut être prépositionné au démarrage du moteur et la vanne peut comporter une lumière coopérant avec une caractéristique de pression fournie par la pompe au démarrage afin d'assurer un asservissement du débit de carburant au démarrage.

La deuxième vanne peut aussi être une vanne à commande directe commandée électriquement au moyen d'au moins un actionneur électromécanique.

On pourra en outre prévoir une troisième vanne de coupure montée sur la conduite d'alimentation en série avec la première et la deuxième vannes.

### Brève description des dessins

L'invention sera mieux comprise à la lecture de la description faite ci-après, à titre indicatif mais non limitatif, en référence aux dessins annexés sur lesquels :
- la figure 1 illustre un mode de réalisation d'un dispositif d'alimentation en carburant muni d'un circuit de régulation conforme à l'invention, et
- les figures 2 et 3 sont des schémas partiels illustrant des variantes de réalisation du circuit de régulation de la figure 1.

### Description détaillée de modes de réalisation de l'invention

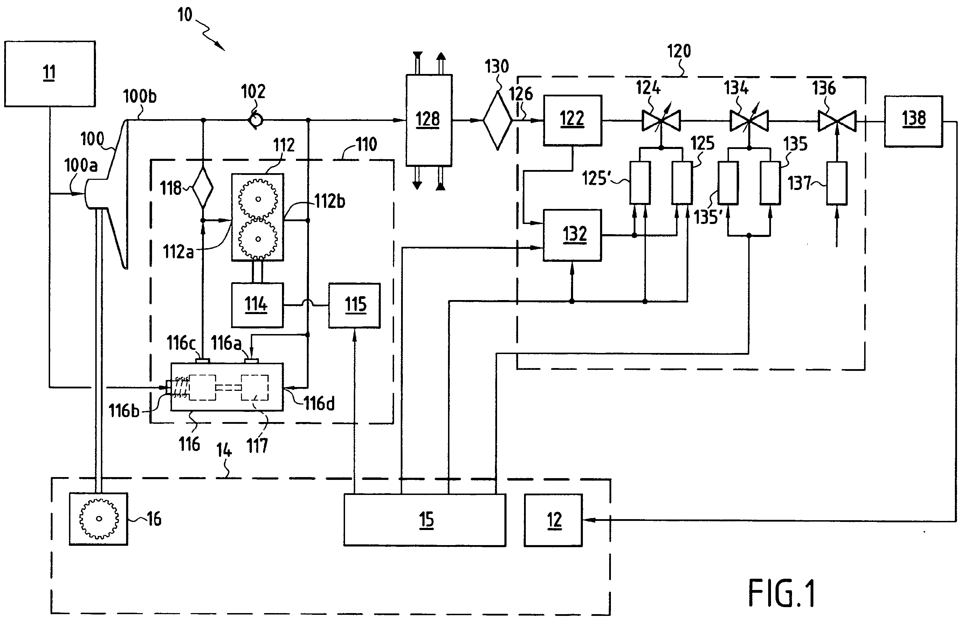

Le circuit 10 d'alimentation en carburant de la figure 1 reçoit du carburant en provenance d'un circuit de carburant 11 d'un avion et délivre un débit de carburant à un système 12 d'injection de carburant d'une chambre de combustion de turbine à gaz d'un moteur 14 équipant l'avion.

Le circuit 10 comprend une pompe centrifuge 100 constituant la pompe principale du circuit. La pompe 100 a une entrée 100a reliée au circuit de carburant 11 et une sortie haute pression 100b délivrant du carburant à une pression fonction de la vitesse de rotation de la pompe. L'entraînement de la pompe est réalisé par liaison mécanique avec le module 16 d'entraînement d'accessoires du moteur 14 couplé à la turbine de celui-ci.

Un groupe de pompage d'assistance 110 comprend une pompe volumique 112 ayant une entrée 112a reliée à la sortie de la pompe centrifuge 100, un moteur électrique 114 d'entraînement de la pompe 112 commandé par un circuit de commande électrique 115 et un clapet de surpression 116.

La pompe 112 est par exemple une pompe à engrenages. Un filtre 118 peut être monté entre la sortie 100b de la pompe 100 et l'entrée 112a de la pompe 112 pour protéger celle-ci vis-à-vis de particules solides éventuelles véhiculées par le carburant issu du circuit 11. Le fonctionnement de la pompe centrifuge 100 n'est pas affecté par de telles particules.

Le circuit de commande électrique 115 est relié à un module 15 de régulation électronique à pleine autorité du moteur 14, ou FADEC, pour commander le fonctionnement de la pompe 112. Ce circuit de commande 115 pourrait aussi être intégré au module de régulation 15.

Le clapet de surpression 116 a une première entrée 116a reliée à la sortie 112b de la pompe 112, une deuxième entrée 116b reliée au circuit de carburant de l'avion et fournissant une pression de référence au clapet 116, et une sortie 116c reliée à l'entrée 112a de la pompe 112. Le clapet de surpression est réglé pour s'ouvrir et mettre en communication la première entrée 116a avec la sortie 116c lorsque la différence de pression entre les entrées 116a et 116b dépasse un seuil prédéterminé. Pour réaliser le clapet 116, on pourra utiliser un tiroir 117 soumis, d'un côté, à la pression de sortie de la pompe 112, via une prise de pression 116d et, d'un autre côté, à la pression sur la deuxième entrée 116b augmentée d'une force exercée par un ressort.

La sortie 100b de la pompe centrifuge 100 est reliée par un clapet anti-retour 102 à l'entrée d'un circuit 120 de régulation du débit de carburant fourni au système 12 d'injection de carburant, tandis que la sortie 112b de la pompe 112 est reliée à l'entrée du circuit de régulation 120.

Le fonctionnement est le suivant.

Le clapet de surpression 116 est réglé pour s'ouvrir sous une pression correspondant à une pression minimale Pm prédéterminée permettant de couvrir le besoin minimal en carburant du moteur 14 au démarrage.

La pompe volumétrique 112 est démarrée et est entraînée à une vitesse permettant de délivrer un débit de carburant excédant le besoin initial du moteur 14 fixé par le circuit de régulation 120, de sorte que la pression en sortie 112b de la pompe 112 atteint quasi-instantanément la pression minimale Pm provoquant l'ouverture du clapet de surpression 116. La pression à la sortie 100b de la pompe centrifuge commence à croître avec le démarrage du moteur 14 mais ne couvre pas initialement le besoin en pression de carburant. La pression à la sortie 112b de la pompe 112 est alors régulée à la valeur de pression Pm, le carburant fourni par la pompe 112 et non débité vers le système d'injection 12 circulant en circuit fermé entre la sortie et l'entrée de la pompe 112 via le clapet 116. Le clapet anti-retour 102 empêche le retour du carburant délivré par la pompe 112 vers la pompe centrifuge 100.

Le groupe de pompage 110 assure donc une fonction d'assistance au démarrage, le clapet 116 permettant de convertir la pompe volumétrique 112 en une pompe délivrant une pression de carburant, de la même façon qu'une pompe centrifuge. Toutefois, contrairement à ce qui peut se passer avec une pompe centrifuge, le fonctionnement de la pompe volumétrique 112 n'est pas affecté par la présence d'air ou de vapeur dans le carburant tiré initialement du circuit 11.

La pression en sortie de la pompe 100 augmente lorsque le régime du moteur croît et lorsque cette pression dépasse la valeur Pm, le clapet anti-retour 102 s'ouvre. La pression fournie au circuit 120 de régulation de débit est alors celle fournie par la pompe centrifuge 100.

L'ensemble pompe 100, groupe de pompage 110 et clapet 102 se comporte comme un système de pompage permettant une transition par prépondérance entre les pompes 112 et 100, la pression délivrée étant la plus élevée des pressions en sortie des pompes 112 et 100.

Lorsque la pompe 100 a pris le relais de la pompe 112, le fonctionnement de celle-ci peut être arrêté. L'arrêt peut être commandé en réponse au dépassement d'un seuil de pression P₁ en sortie de la pompe 100 ou en réponse au dépassement d'un seuil de régime V₁ du moteur 14. Cela peut être commandé par le module de régulation électronique 15 agissant sur le circuit électrique de commande 115 en réponse à des informations fournies par un capteur de pression carburant ou par un capteur de vitesse de turbine du moteur 14. Les seuils P₁ et V₁ peuvent être choisis pour correspondre à une valeur un peu supérieure à Pm.

On notera que le groupe de pompage 110 peut être utilisé non seulement au démarrage mais aussi lors d'autres phases de fonctionnement du moteur au ralenti ou à bas régime dans le cas où la pompe centrifuge 100 devient alors incapable de fournir la pression minimale Pm de carburant. Il suffit alors de relancer le moteur 114 par le circuit de commande 115 si une baisse de pression carburant en deçà d'un certain seuil ou une diminution du régime du moteur en deçà d'un certain seuil régime est détectée.

Le groupe de pompage 110 se comporte alors non seulement comme un groupe d'assistance au démarrage mais aussi comme un groupe d'assistance aux bas régimes du moteur pour fournir en toutes circonstances une pression minimale suffisante de carburant.

Dans le mode de réalisation illustré, la pompe 112 est reliée au circuit de carburant 11 à travers la pompe centrifuge qui est « transparente » pour la pompe 112 au démarrage. Ce branchement permet à la pompe 112 de bénéficier de l'augmentation de pression provoquée par la pompe 100 dès qu'elle commence à être entraînée.

Il serait bien entendu possible de relier l'entrée 112a de la pompe 112 au circuit de carburant 11 via un filtre, sans passer à travers la pompe centrifuge 100.

Le circuit 120 de régulation du débit de carburant reçoit du carburant fourni par la pompe 100 sous une pression non régulée fonction du régime moteur. Il comprend un débitmètre massique 122 et une vanne carburant à commande directe 124 montés sur une conduite 126 reliant la pompe 100 et le groupe de pompage d'assistance 110 au dispositif 12 d'injection de carburant. Le débitmètre 122 est monté de préférence en amont de la vanne 124. Un circuit 128 d'échange thermique entre de l'huile de lubrification d'organes du moteur et le carburant, et un filtre à particules 130 peuvent être insérés sur la conduite 110 en amont du débitmètre 122, de tels circuits d'échange thermique et filtre étant en eux-mêmes bien connus.

La vanne 124 est par exemple une vanne à commande directe commandée électriquement. Le degré d'ouverture de la vanne est commandé au moyen d'un actionneur électromécanique 125 tel qu'un vérin ou moteur électrique. L'actionneur 125 reçoit une alimentation électrique à partir d'un circuit électrique du moteur 14, par exemple à partir d'une alimentation intégrée au module 15 de régulation électronique du moteur ou d'un bus d'alimentation électrique du moteur 14. A titre de redondance, deux actionneurs semblables 125, 125' fonctionnant en parallèle pourront être prévus.

Une boucle locale d'asservissement 132 alimentée à partir d'un circuit électrique du moteur reçoit un signal électrique fourni par le débitmètre massique 122 représentatif du débit massique réel de carburant dans la conduite 126 et un signal électrique fourni par le module 15 de régulation électronique du moteur et représentatif de la valeur de consigne souhaitée du débit massique à fournir au moteur 14. La boucle d'asservissement 132 fournit à l'actionneur 125 un signal électrique de commande fonction de l'écart détecté entre les débits massiques réel et de consigne afin de positionner la vanne 124 pour réguler le débit à la valeur de consigne souhaitée en régime de fonctionnement normal du moteur. Le même signal de commande est fourni en parallèle à l'actionneur 125' s'il est présent.

Bien entendu, la régulation pourra être assurée par un module électronique intégré au système de régulation automatique 15 du moteur 14. L'utilisation d'une boucle locale 132, extérieure au boîtier de ce module, permet toutefois d'éviter la présence de liaison de ce dernier avec le débitmètre 122.

La vanne 124 peut être du type décrit dans le document US 6 367 768, dont le fonctionnement comporte un mode de prépositionnement de l'actionneur. L'actionneur comporte une mesure de position (position directe absolue ou incrémentale) et la vanne comporte une lumière de profil déterminé. Une possibilité de régulation du débit au démarrage du moteur, en mode de prépositionnement, est offerte en association avec la caractéristique de débit fournie par le groupe de pompage 110 avec le clapet de suppression 116. Le réglage de débit peut alors être réalisé de façon redondante avec le débitmètre afin de fiabiliser la régulation aux très petits débits si la technologie du débitmètre devient insuffisante.

Une vanne 134 de protection de sur-vitesse ou de sur-poussée du moteur 14 est montée sur la conduite 126 en aval de la vanne 124. On pourra avantageusement utiliser une vanne à commande directe avec actionneur électromécanique 135, de façon semblable à la vanne 124 et l'actionneur 125. L'actionneur 135 est commandé à partir du système de régulation automatique 15 du moteur 14 par un module distinct de celui dédié à la régulation par la vanne 124, à titre de sécurité. En effet, une sur-vitesse ou sur-poussée du moteur peut provenir d'une défaillance de la vanne 124 ou de sa commande, laissant la vanne en position pleine ouverte. A titre de redondance, deux actionneurs semblables 135, 135' fonctionnant en parallèle peuvent être prévus.

En régime moteur normal, conforme à la consigne, la vanne 134 est en position d'ouverture maximale et la régulation du débit est assurée par la vanne 124.

Le module de régulation électronique 15 du moteur reçoit une information représentative du régime du moteur, par exemple une information représentative de la vitesse de rotation de la turbine haute-pression. Lorsqu'un état de sur-vitesse (ou sur-poussée) est détecté, c'est-à-dire une vitesse dépassant la valeur de consigne de vitesse au-delà d'un écart déterminé, et ne peut être corrigé par action sur la vanne 124, la vanne 134 est commandée pour réduire le débit de carburant dans la conduite 126.

Le système de régulation automatique 15 peut être programmé pour amener la vanne 134 dans une position de fermeture partielle prédéterminée de sécurité permettant de fournir un débit de carburant réduit. L'utilisation pour la vanne 134 d'une vanne à commande directe est alors avantageuse en ce qu'elle permet de conserver une pilotabilité du moteur par modification du débit de carburant au moins dans une plage réduite. Cette modification peut être effectuée par le système de régulation automatique 15 en fonction d'un régime de moteur souhaité. Ainsi, suite à une détection de sur-vitesse, la vanne 134 prend le relais de la vanne 124 pour continuer à autoriser une variation de débit au moins dans une certaine plage.

Par rapport aux systèmes de l'état de la technique dans lesquels le fonctionnement de la vanne de sur-vitesse est à deux états : (i) pleine ouverture ou (ii) coupure ou ouverture réduite prédéterminée, la possibilité d'une régulation du débit après détection de sur-vitesse ou de sur-poussée permet de conserver une poussée moteur et d'éviter une situation dans laquelle un débit réduit imposé peut ne pas être acceptable par le moteur dans certaines conditions.

Une vanne de fermeture 136 de type tout ou rien est montée sur la conduite 126, par exemple en aval de la vanne 134. La vanne 136 peut être commandée par un actionneur électromécanique 137. De façon connue, la vanne de fermeture 136 peut être actionnée par commande à partir du système de régulation automatique 15 du moteur ou, prioritairement, à partir du poste de pilotage de l'avion pour couper le moteur 14 par interruption de l'alimentation en carburant.

De façon connue aussi, un débitmètre massique totaliseur 138 peut être monté sur la conduite 126 en aval de la vanne 136 pour fournir une information sur la consommation cumulée du moteur en masse de carburant.

Le besoin d'un moteur en carburant est traduit en masse de carburant. L'utilisation du débitmètre massique 122 permet donc, dans la limite de sa marge d'erreur, une régulation précise de l'alimentation en carburant à partir d'une valeur de consigne de débit massique. Le débitmètre massique peut être du type de ceux décrits dans les documents US 2004/0123674 et US 2004/0129088.

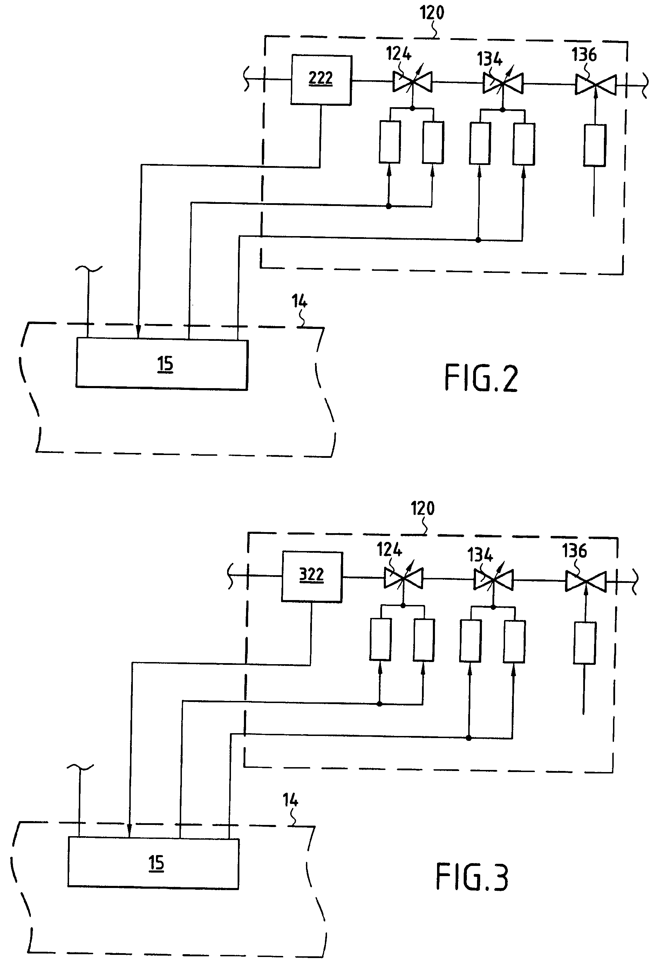

Il est toutefois possible, comme le montre la figure 2, de remplacer le débitmètre massique par un débitmètre volumique 222. L'information de débit volumique réel mesuré par le débitmètre 222 est transmise au système de régulation automatique 15 du moteur 14. Le système 15 est programmé pour traduire le besoin du moteur en débit volumique de consigne à partir d'une valeur de masse volumique estimée du carburant. La vanne 124 à commande directe est alors commandée par le système 15 pour asservir le débit volumique dans la conduite 126 à la valeur de consigne souhaitée.

Selon encore un autre mode de réalisation, comme le montre la figure 3, on peut utiliser un dispositif 322 qui permet une mesure de débit à partir de la connaissance de la chute de pression ΔP à travers le dispositif 322, de la section de passage de carburant à travers le dispositif 322 et de la masse volumique du carburant. Le débit est déterminé par la mesure par un capteur (non représenté) de la position d'une vanne dont la perte de charge est imposée par un ressort.

On notera que le dispositif 322 est connu en soi. On pourra se reporter au document EP 1 344 917. Le dispositif 322 a aussi une construction analogue à celle de vannes de dosage hydrauliques utilisées dans des systèmes connus d'alimentation de moteurs d'avion en carburant, telle que celle du document EP 1 355 054.

Dans la description qui précède, l'utilisation de vannes 124, 134, 136 à commande électrique est envisagée. On pourra en variante utiliser des vannes à commande hydraulique.

Par ailleurs, le dispositif d'alimentation décrit peut être utilisé pour des moteurs d'aéronefs autres que des moteurs d'avions à turbine à gaz, par exemple des moteurs d'hélicoptères.

## Revendications

1. Dispositif d'alimentation en carburant d'un moteur à turbine à gaz avec un débit de carburant régulé, comprenant :
- une conduite (126) d'alimentation de moteur en carburant,
- une pompe (100) reliée à la conduite d'alimentation et fournissant à celle-ci du carburant sous une pression fonction du régime moteur,
- un dispositif (122) de mesure du débit de carburant dans la conduite d'alimentation,
- une première vanne (124) à ouverture variable commandée montée sur la conduite d'alimentation,
- un premier circuit de commande (15, 132, 125-125') relié au dispositif de mesure de débit et à la première vanne pour commander celle-ci afin de fournir au moteur un débit de carburant désiré régulé en régime de fonctionnement normal du moteur,
- une deuxième vanne (134) montée sur la conduite d'alimentation en série avec la première, et
- un deuxième circuit de commande (15, 135-135') relié à la deuxième vanne pour agir sur celle-ci en réponse à une détection de sur-vitesse ou de sur-poussée du moteur, **caractérisé en ce que** la deuxième vanne (134) est à ouverture variable commandée et le deuxième circuit de commande (15, 135 -135') est agencé pour commander une diminution du débit de carburant dans la conduite d'alimentation et pour permettre une modification du débit de carburant au moins dans une plage réduite et conserver ainsi une pilotabilité du moteur suite à une détection de sur-vitesse ou de sur-poussée.

2. Dispositif selon la revendication 1, dans lequel le dispositif de mesure de débit est un débitmètre massique et le système de commande comprend un circuit local d'asservissement recevant une consigne de valeur de débit massique d'un système de régulation automatique du moteur.

3. Dispositif selon la revendication 1, dans lequel le dispositif de mesure de débit est un débitmètre volumique.

4. Dispositif selon la revendication 1, dans lequel le dispositif de mesure de débit est un dispositif permettant une mesure de débit à partir de la connaissance de la chute de pression et de la section de passage à travers ce dispositif.

5. Dispositif selon l'une des revendications 1 à 4, dans lequel la première vanne est une vanne à commande directe commandée électriquement.

6. Dispositif selon la revendication 5, dans lequel le premier circuit de commande comprend au moins un actionneur électromécanique pour commander le degré d'ouverture de la première vanne, et une boucle d'asservissement recevant un signal fourni par le dispositif de mesure de débit et représentatif du débit réel de carburant, recevant un signal de consigne représentatif du débit souhaité de carburant et fournissant un signal de commande de l'actionneur en fonction de l'écart détecté entre les débits réel et souhaité.

7. Dispositif selon la revendication 6, dans lequel la boucle d'asservissement est une boucle implantée localement au voisinage de la première vanne et extérieure à un système de régulation électronique du moteur fournissant le signal de consigne.

8. Dispositif selon l'une quelconque des revendications 6 et 7, dans lequel l'actionneur électromécanique peut être prépositionné au démarrage du moteur et la vanne comporte une lumière coopérant avec une caractéristique de pression fournie par la pompe au démarrage afin d'assurer un asservissement du débit de carburant au démarrage.

9. Dispositif selon l'une quelconque des revendications 1 à 4, dans lequel la deuxième vanne est une vanne à commande directe commandée électriquement au moyen d'au moins un actionneur électronique.

10. Dispositif selon l'une quelconque des revendications 1 à 9, **caractérisé en ce qu'**il comporte en outre une troisième vanne de coupure montée sur la conduite d'alimentation en série avec la première et la deuxième vannes.

## Patentansprüche

1. Vorrichtung zur Treibstoffversorgung eines Gasturbinenmotors mit einer regulierten Treibstoffmenge, umfassend:
- eine Leitung (126) zur Versorgung des Motors mit Treibstoff,
- eine Pumpe (100), die mit der Versorgungsleitung verbunden ist und an diese Treibstoff unter einem Druck liefert, der von der Motordrehzahl abhängt,
- eine Vorrichtung (122) zum Messen der Treibstoffmenge in der Versorgungsleitung,
- ein erstes Ventil (124) mit gesteuerter variabler Öffnung, das auf der Versorgungsleitung montiert ist,
- eine erste Steuerschaltung (15, 132, 125-125'), die mit der Vorrichtung zur Mengenmessung und dem ersten Ventil verbunden ist, um dieses zu steuern, um an den Motor eine regulierte gewünschte Treibstoffmenge im Normalbetriebsmodus des Motors zu liefern,
- ein zweites Ventil (134), das auf der Versorgungsleitung in Serie mit dem ersten montiert ist, und
- eine zweite Steuerschaltung (15, 135-135'), die mit dem zweiten Ventil verbunden ist, um auf dieses als Antwort auf eine Erfassung einer Überdrehzahl oder eines Überschubs des Motors einzuwirken,
**dadurch gekennzeichnet, dass** das zweite Ventil (134) mit gesteuerter variabler Öffnung ist, und die zweite Steuerschaltung (15, 135-135') angeordnet ist, um eine Verringerung der Treibstoffmenge in der Versorgungsleitung zu steuern, und um eine Änderung der Treibstoffmenge mindestens in einem kleinen Bereich zu ermöglichen und auf diese Weise eine Steuerbarkeit des Motors nach einer Erfassung einer Überdrehzahl oder eines Überschubs zu bewahren.

2. Vorrichtung nach Anspruch 1, bei der die Vorrichtung zur Treibstoffmessung ein Massendurchflussmessgerät ist, und das Steuersystem eine lokale Steuerschaltung umfasst, die einen Massendurchflusssollwert von einem automatischen Regelsystem des Motors empfängt.

3. Vorrichtung nach Anspruch 1, bei der die Durchflussmessvorrichtung ein Volumendurchflussmessgerät ist.

4. Vorrichtung nach Anspruch 1, bei der die Durchflussmessvorrichtung eine Vorrichtung ist, die eine Durchflussmessung auf Basis der Kenntnis des Druckabfalls und des Durchgangsquerschnitts durch diese Vorrichtung ermöglicht.

5. Vorrichtung nach einem der Ansprüche 1 bis 4, bei der das erste Ventil ein elektrisch gesteuertes Ventil mit Direktsteuerung ist.

6. Vorrichtung nach Anspruch 5, bei der die erste Steuerschaltung mindestens einen elektromechanischen Aktuator, um den Öffnungsgrad des ersten Ventils zu steuern, und eine Steuerschleife umfasst, die ein Signal empfängt, das von der Durchflussmessvorrichtung geliefert wird und für die tatsächliche Treibstoffmenge repräsentativ ist, die ein Sollwertsignal empfängt, das für die gewünschte Treibstoffmenge repräsentativ ist, und die ein Steuersignal des Aktuators in Abhängigkeit von der erfassten Abweichung zwischen den tatsächlichen und gewünschten Mengen liefert.

7. Vorrichtung nach Anspruch 6, bei der die Steuerschleife eine lokal eingebaute Schleife in der Nähe des ersten Ventils und außerhalb eines elektronischen Regelsystems des Motors, das das Sollwertsignal liefert, ist.

8. Vorrichtung nach einem der Ansprüche 6 und 7, bei der der elektromechanische Aktuator beim Starten des Motors vorpositioniert sein kann, und das Ventil eine Öffnung umfasst, die mit einem Druckmerkmal zusammenwirkt, das von der Pumpe beim Starten geliefert wird, um eine Steuerung der Treibstoffmenge beim Starten zu gewährleisten.

9. Vorrichtung nach einem der Ansprüche 1 bis 4, bei der das zweite Ventil ein elektrisch gesteuertes Ventil mit direkter Steuerung mit Hilfe mindestens eines elektronischen Aktuators ist.

10. Vorrichtung nach einem der Ansprüche 1 bis 9, **dadurch gekennzeichnet, dass** sie ferner ein drittes Unterbrechungsventil umfasst, das auf der Versorgungsleitung in Serie mit dem ersten und dem zweiten Ventil montiert ist.

## Claims

1. A supply device for supplying fuel at a regulated flow rate to a gas turbine engine, the device comprising:
• a pipe (126) for supplying fuel to the engine;
• a pump (100) connected to the supply pipe and delivering it with fuel at a pressure that is a function of engine speed;
• a flow rate measuring device (122) for measuring the fuel flow rate in the supply pipe;
• a first controlled variable-restriction valve (124) connected in the supply pipe;
• a first control circuit (15, 132, 125-125') connected to the flow rate measurement device and to the first valve to control the valve to deliver a regulated desired fuel flow rate under normal operating conditions of the engine;
• a second valve (134) mounted in the supply pipe in series with the first valve; and
• a second control circuit (15, 135-135') connected to the second valve to act on it in response to detecting over-speed or over-thrust of the engine, **Characterized in that** the second valve (134) is a controlled variable restriction valve and the second control circuit (15, 135-135') is configured to control a reduction of the flow rate of fuel in the supply pipe and to adjust the flow rate of fuel in at least a reduced range, thus conserving a controllability of the engine after over-speed or over-thrust detection.

2. A device according to claim 1, in which the flow rate measurement device is a mass flow meter and the control system includes a local servo-control circuit receiving a mass flow rate setpoint value from an automatic regulation system of the engine.

3. A device according to claim 1, in which the flow rate measurement device is a volumetric flow meter.

4. A device according to claim 1, in which the flow rate measurement device is a device for measuring flow rate on the basis of knowledge of the pressure drop and the flow section through the measurement device.

5. A device according to any one of claims 1 to 4, in which the first valve is an electrically-controlled direct-control valve.

6. A device according to claim 5, in which the first control circuit comprises at least one electromechanical actuator for controlling the degree to which the first valve is opened, and a servo-control loop receiving a signal delivered by the flow rate measurement device and représentative of the real fuel flow rate, receiving a setpoint signal representative of the desired fuel flow rate, and delivering a control signal to the actuator as a function of the différence detected between the real and desired flow rate.

7. A device according to claim 6, in which the servo-control loop is a loop implanted locally in the vicinity of the first valve and external to an electronic regulation system of the engine supplying the setpoint signal.

8. A device according to claim 6 or claim 7, in which the electromechanical actuator can be pre-positioned on starting the engine and the valve includes a slot cooperating with a pressure characteristic delivered by the pump on starting so as to servo-control the fuel flow rate on starting.

9. A device according to any one of claims 1 to 4, in which the second valve is a direct-control valve controlled electrically by means of at least one electronic actuator.

10. A device according to any one of claims 1 to 9, **characterized in that** it further includes a cutoff, third valve mounted in the supply pipe in series with the first and second valves.
